# EUROPEAN PATENT APPLICATION

(11) **EP 4 657 359 A1**
(43) Date of publication of application: **03.12.2025**
(21) Application number: 23918700.8
(22) Date of filing: 26.01.2023
(51) Int. Cl.: G06Q 50/10, G06F 3/14, G06F 3/0488, G06F 3/0484, G06Q 20/18, H04L 67/125, G06Q 10/06, B25J 11/00, B25J 9/16

(54) **INTEGRATED SHOP MANAGEMENT SYSTEM AND INTEGRATED SHOP MANAGEMENT METHOD**

(71) Applicant: LG Electronics Inc., Yeongdeungpo-gu Seoul 07336 (KR)
(72) Inventor: JOO, Yeonjoo, Seoul 06772 (KR); KIM, Seunghee, Seoul 06772 (KR); LEE, Yongdeok, Seoul 06772 (KR); KOO, Sangjun, Seoul 06772 (KR); JEON, Bongjeong, Seoul 06772 (KR); JEON, Janghwan, Seoul 06772 (KR); CHOI, Minkyu, Seoul 06772 (KR); YOO, Hana, Seoul 06772 (KR)
(74) Representative: Vossius & Partner Patentanwälte Rechtsanwälte mbB
(86) International application number: PCT/KR2023/001203
(87) International publication number: WO 2024/158064

(57) **Abstract**

Disclosed are an integrated shop management system (1000) and an integrated shop management method. An integrated shop management method according to the present invention comprises: a step for communicatively connecting (S10) an unmanned terminal apparatus and a plurality of apparatuses in a shop in response to the execution of a shop management mode; a step for receiving (S20)an input selecting one of a plurality of operating modes via the unmanned terminal apparatus; and a step for making(S30) each of the plurality of apparatuses in the shop that have received a signal corresponding to the selected operating mode perform an operation related to the operating mode corresponding to the signal. Accordingly, the plurality of apparatuses in the shop can be simultaneously operated in a manner suitable for the business situation of the shop, and thus efficient integrated operation of the shop is possible with little manpower or effort.

## Description

### Technical Field

The present disclosure relates to an integrated store management system and an integrated store management method and, more specifically, to an integrated store management system and an integrated store management method that are capable of simultaneously operating a plurality of apparatuses in an integrated manner according to a store operating state.

### Background Art

In recent years, many stores have installed kiosks to receive customer order information in order to enhance their operational efficiency. In addition, one-person stores or unmanned stores have been introduced in various industries in response to increased demand for contactless service and to reduce labor-related costs resulting from rising wages.

In most stores, kiosks are employed to facilitate customer ordering and payment. The information generated by these kiosks is transmitted to a POS terminal for a manager or an equivalent apparatus for synchronization, thereby aiding in store management.

However, the kiosks are presently configured to operate in conjunction with the POS terminal to synchronize order records, payment records, or to update the POS terminal with information generated from the kiosks, such as inventory management and menu modification. In addition, in the related art, in most cases, the kiosks are used in conjunction with other apparatuses. Accordingly, the kiosks perform essential store operations such as payment, ordering, sales, and member management, thereby limiting the application scope thereof.

In addition, lighting and air conditioning of the store can be controlled either individually or integrally, at least by manual operation of the manager, through the POS terminal or a similar apparatus during store operations. Furthermore, in most cases, apparatuses within the store, such as robots, some lighting equipment, and air conditioning systems, require manual intervention by the user to change their state. For this reason, there are limitations in operating unmanned stores using various apparatuses within the store.

Therefore, in operating single-person stores or unmanned stores, it is necessary to seek methods for enhancing user convenience and reducing the operational burden placed on the manager.

### Disclosure of Invention

### Technical Problem

One object of some embodiments of the present disclosure is to provide an integrated store management system and an integrated store management method that are capable of expanding the integration of apparatuses with kiosks and broadening the application scope of the kiosks within the store.

Another object of some embodiments of the present disclosure is to provide an integrated store management system and an integrated store management method that are capable of supporting and managing the entire store operation process by recognizing store operations in a context-aware manner with respect to the entire store operation process throughout all operational periods, including before, during, and after sales hours. The system and the method are configured neither to perform store management in accordance with apparatuses that operate in conjunction with one another, nor to restrict the store management to only some of the apparatuses.

Still another object of some embodiments of the present disclosure is to provide an integrated store management system and an integrated store management method that are capable of more efficiently managing a store while providing greater convenience to users and minimizing the time and effort spent by the store manager.

### Solution to Problem

An integrated store management method according to the present disclosure is capable of simultaneously operating a plurality of apparatuses in accordance with the sales state status of a store when a manager provides a notification of the sales stage status thereof using an unmanned terminal apparatus.

For example, when a sales preparation status is activated, the screens of monitors within the store are turned on, a guide robot moves to a designated location to perform sales preparation, and lighting equipment or an air conditioner operates to enter a powered-on state.

According to one aspect of the present disclosure, there is provided an integrated store management method including: a step of communicatively connecting an unmanned terminal apparatus to a plurality of apparatuses within a store in response to execution of a store management mode; a step of receiving, as input, one operating mode selected from among a plurality of operating modes through the unmanned terminal apparatus; and a step of performing, by each of the plurality of apparatuses, an operation associated with the operating mode corresponding to a signal corresponding to the selected operation mode after receiving the signal.

In an embodiment, the plurality of apparatuses may include two or more selected from the following: one or more display apparatuses, a mobile robot, and lighting equipment, and operations associated with the operating mode corresponding to the received signal may include changing at least one of the following: an operational state, control mode, screen state, location, function in progress, or traveling method of each apparatus, each of which corresponds to the selected operating mode.

In an embodiment, the unmanned terminal apparatus, one of the plurality of apparatuses, may include a touch screen, and in the step of receiving the selected operating mode, as input, one operating mode may be selected, as input, from among the plurality of operating modes using a first screen displayed on the touch screen of the unmanned terminal apparatus, when the store management mode is executed.

In an embodiment, the step of performing the operation associated with the operating mode may include a step of displaying a second screen associated with the selected operating mode on the touch screen in response to the selection of the operating mode using the first screen.

In an embodiment, the selected operating mode may correspond to a specific operating mode matched with a sales stage status of the store, among a plurality of operating modes, and the sales stage status of the store is one of the following: a sales preparation status, a sales-in-progress status, a sales wrap-up status, or a sales closure status.

In an embodiment, the step of receiving the selected operating mode, as input, may include a step of selecting one operating mode from among the plurality of operating modes based on a touch gesture on the first screen, and when a switch occurs from any one of the plurality of operating modes to another by performing the touch gesture, a sub-selection menu activated for each operating mode is changed together on the first screen and is displayed thereon.

In an embodiment, the integrated store management method may further include: a step of receiving a selection input from the sub-selection menu activated for the selected operating mode; a step of transmitting the signal containing first information on the selected operating mode and second information on the selected sub-selection menu to each of the plurality of apparatuses; and a step of performing, by each of the plurality of apparatuses, an operation associated with an operating mode corresponding to the first information after changing an operation of an apparatus associated with the second information, among the plurality of apparatuses, when the operation associated with the operating mode corresponding to the first information is to be performed.

In an embodiment, the step of performing the operation associated with the operating mode may include a step of performing, by each of the plurality of apparatuses, an operation corresponding to a function that is set, after the mobile robot moves to a location associated with the selected operating mode.

In an embodiment, an initial location of the mobile robot associated with the selected operating mode may be determined in a manner that varies according to an attribute of the selected operating mode, and the operation corresponding to the set function may be determined in a manner that varies based on an attribute of the mobile robot, the selected operating mode, and whether a signal is generated due to the absence of a manager.

In an embodiment, the step of receiving the selected operating mode, as input, may include: a step of receiving a selection input corresponding to the absence of the manager through the unmanned terminal apparatus while an operating mode corresponding to a sales-in-progress status of the store is being executed, and the step of performing the operation associated with the operating mode may include a step of switching, by the mobile robot, an operation from a first control mode corresponding to the sales-in-progress status of the store to a second control mode configured for the absence of the manager, based on recognizing the absence of the manager.

In an embodiment, the step of performing the operation associated with the operating mode may include: a step of executing, by the mobile robot, a mode for accompanying a manager after moving to a designated location, when an operating mode corresponding to a sales wrap-up status of the store is executed, and executing, by the mobile robot, a traveling mode for security when a switch to an operating mode corresponding to a sales closure status of the store occurs.

In an embodiment, the step of receiving the selected operating mode, as input, may include: a step of setting an execution time of the operating mode based on user input; and a step of generating an input signal for selecting a corresponding operating mode in response to reaching the set execution time.

In an embodiment, the step of performing the operation associated with the operating mode may include: a step of determining whether at least one of the plurality of apparatuses is an apparatus capable of receiving a system update; a step of requesting, by the at least one apparatus, the system update from a server after a screen of the at least one apparatus is turned on or before the screen thereof is turned off; and a step of displaying, by the at least one apparatus, a sales preparation screen or a sales closure screen after the system update is performed, based on a response to the request.

According to another aspect of the present disclosure, there is provided an integrated store management system including: a plurality of apparatuses within a store; an unmanned terminal apparatus communicatively connected to the plurality of apparatuses in response to execution of a store management mode; and a server that, using at least one protocol, receives a first signal corresponding to an operating mode selected from among a plurality of operating modes through the unmanned terminal apparatus and transmits a second signal containing operating mode information contained in the received first signal to each of the plurality of apparatuses. In the integrated store management system, the plurality of apparatuses within the store receive the second signal and perform respective operations associated with a corresponding operating mode.

### Advantageous Effects of Invention

An integrated store management system and an integrated store management method according to some embodiments of the present disclosure can overcome limitations in the operations of existing kiosks due to constraints in ordering, payment, and advertisement functionalities, and can support and manage all processes from sales preparation to sales closure within a store, thereby maximizing the utilization of the kiosks.

In addition, instead of conveniently replacing only a part of store operation, the integrated store management system and the integrated store management method according to some embodiments of the present disclosure can be involved in all processes for the store operation to perform the context-aware integrated store operation, thereby minimizing reliance on operational personnel and ensuring the convenience for both a user and a manager.

In addition, the integrated store management system and the integrated store management method according to some embodiments of the present disclosure can simultaneously change the operational states of all apparatuses connected within the store in accordance with the current sales stage status by simply changing the operating mode of the store. Accordingly, an efficient and integrated operation of the store is possible with fewer personnel and reduced effort.

Furthermore, the integrated store management system and the integrated store management method according to some embodiments of the present disclosure switch the apparatuses within the store, which operate in conjunction with one another, to respective operation modes appropriately in response to the absence of the manager while the manager is absent during sales hours, thereby performing the context-aware integrated store operation by distinguishing between the presence and absence of the manager.

### Brief Description of Drawings

FIG. 1 is a diagram illustrating the configuration of an integrated store management system according to the present disclosure.
FIG. 2 is a diagram illustrating the interior of a store in which the integrated store management system according to the present disclosure is installed.
FIG. 3 is a representative flowchart illustrating an integrated store management method according to the present disclosure.
FIGS. 4A, 4B, 5, 6A, 6B, 6C, 7A, and 7B are diagrams illustrating a screen and an operation, based on a sales stage status, of each of the plurality of apparatuses within a store, the screen and the operation being triggered by the operation of the integrated store management system according to the present disclosure.
FIG. 8 is a diagram illustrating an example of a screen for operating an unmanned terminal apparatus according to the present disclosure in a plurality of usage modes.
FIG. 9 is a diagram that is referenced to describe the operation, based on each operating mode, of a mobile robot according to the present disclosure within the store.
FIGS. 10 and 11 are flowcharts that are referenced to describe an integrated store management method according to another embodiment of the present disclosure.
FIG. 12 is a diagram illustrating a state where the integrated store management systems according to the present disclosure are integrally managed on a per-store basis by an integrated operating solution provider.

### Mode for the Invention

Embodiments disclosed in the present specification will be described in detail below with reference to the accompanying drawings. The identical or similar constituent elements are represented by the same reference numerals, and redundant descriptions thereof are not omitted. The terms 'module' and 'unit' are hereinafter used interchangeably or separately to refer only to a constituent element for convenience of description in the present specification. They are not intended to imply different meanings or to depict different functions. In addition, when describing the embodiments disclosed in the present specification, a detailed description of a well-known related technology may be omitted if it is deemed that such a description would obscure the nature and gist of the present disclosure. In addition, the accompanying drawings are provided solely to facilitate understanding of the embodiments disclosed in the present specification. The technical idea disclosed in the present specification should not be construed as limited to the accompanying drawings. Furthermore, any alteration or equivalent of, or any substitute for, a constituent element according to an embodiment of the present disclosure, to the extent that it falls within the scope of the technical idea of the present disclosure, is intended to be encompassed within the scope of the present disclosure.

The ordinal numbers first, second, and so forth may be used to describe various elements, but they do not limit these elements. The above-mentioned terms are used solely to distinguish one element from another.

It should be understood that a constituent element, when referred to as 'being connected to' or "having access to' a different constituent element, may be directly connected to or have direct access to the different constituent element, or may be indirectly connected to or have access to the different constituent element through one or more intermediate constituent elements. Likewise, it should be understood that a constituent element, when referred to as 'directly connected to' or 'having direct access to' a different constituent element, may be connected to or have access to the different constituent element without any intervening constituent element.

A noun in singular form, unless clearly indicated otherwise by the context, shall be understood to include the plural form.

The terms 'include,' 'have,' and equivalent expressions, as used in the present application, shall be understood to indicate the presence of a feature, number, step, operation, constituent element, component, or combination thereof, without precluding the possibility of the presence or addition of one or more other features, numbers, steps, operations, constituent elements, components, or combinations thereof.

A 'store-integrated management system' disclosed in the present specification is a system that is provided for integrated operation and sales across one or more stores. In the present disclosure, the term "store-integrated management system is conceptually used to refer a system including: a plurality of apparatuses provided within a store; an unmanned terminal apparatus serving as a control apparatus for context-aware operating; a network for communicative connection; and one or more physical apparatuses, such as external or integrated servers. The term may also be used to refer to either a separate apparatus in which an application or program that implements an integrated store management system is installed or stored or the application or program itself.

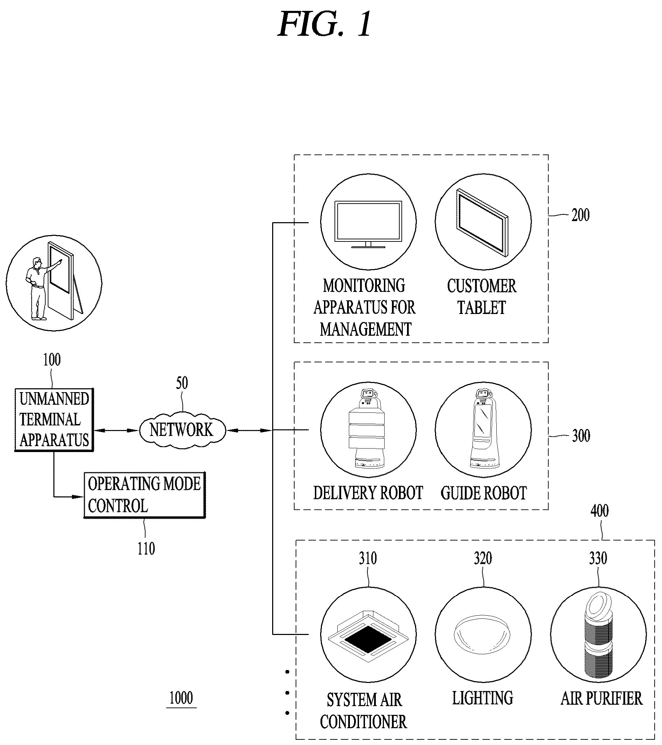

FIG. 1 is a diagram illustrating the configuration of an integrated store management system 1000 according to the present disclosure.

With reference to FIG. 1, the integrated store management system 1000 may be configured to include an unmanned terminal apparatus 100 and a plurality of apparatuses within a store, which are connected through a network 50 that employs one or more communication protocols. The plurality of apparatuses include a display apparatus 200, a mobile robot 300, and environmental control apparatuses 400, such as lighting equipment.

The unmanned terminal apparatus 100 and the plurality of apparatuses (e.g., 200, 300, and 400), which are included in the integrated store management system 1000, may be communicatively connected to one or more servers (not illustrated) and exchange data with one another through the server (not illustrated).

The server (not illustrated), for example, may be configured as a single server computer or a similar system or may be configured as one or more server banks or as a plurality of servers arranged in topologies other than server banks. Additionally, the server may be located in a single facility or may be configured as cloud-based servers distributed across different geographic locations.

In addition, the server (not illustrated) may receive a selection signal associated with operating mode control 110 from the unmanned terminal apparatus 100. To this end, the unmanned terminal apparatus 100 may receive, as input, one selected from among a plurality of selectable operating modes by performing the operating mode control 110, and transmit a corresponding selection signal to the server.

In addition, the server (not illustrated) may transmit an (operating) state signal, which corresponds to an operating mode included in the selection signal associated with the operating mode control 110, to the apparatuses 200, 300, and 400 within the store. The plurality of apparatuses (e.g., 200, 300, and 400) may recognize the operating mode included in the (operating) state signal and perform respective operations corresponding to the recognized operating mode.

The unmanned terminal apparatus 100 may be an electronic apparatus configured to include a user interface, an input module, an output module, a memory module, a communication module, a processor, and other functional components.

The unmanned terminal apparatus 100 may be a kiosk provided within the store.

In this case, the kiosk may include a stand that includes a touch screen for processing a customer order, outputting an advertisement, and performing the operating mode control 110 and a stand from whose portion a receipt is dispensed.

Screen output, selection input, and result output for performing the operating mode control 110 may be provided through the touch screen. The touch screen may include an LED, an LCD, an OLED, or the like over which a touch sensor is layered, but is not limited thereto.

The touch screen may be configured as a double-sided display. In this case, while the processing of the customer order or the operating mode control 110 is performed on one display, an advertisement screen may be output on the other display.

In another embodiment, the unmanned terminal apparatus 100 may be configured as a mobile terminal apparatus. In this case, the operating mode control 110 may be remotely performed by a manager of the store using the unmanned terminal apparatus 100, rather than being performed from within the store.

The unmanned terminal apparatus 100 may operate to allow limited access for performing the operating mode control 110.

For example, when executing a store management mode to perform the operating mode control 110, the unmanned terminal apparatus 100 may request user authentication through appropriate schemes, such as password entry, QR recognition, and fingerprint input. In this case, the unmanned terminal apparatus 100 may operate such that a usage mode of the unmanned terminal apparatus 100 is entered to perform the operating mode control 110, in response to the result of the user authentication.

The network 50 is a communication network that connects the unmanned terminal apparatus 100 to the plurality of apparatuses (e.g., 200, 300, and 400). Examples of the network 50 may include 3^{rd} Generation Partnership Project (3GPP), Long Term Evolution (LTE), World Interoperability for Microwave Access (WIMAX), the Internet, a Local Area Network (LAN), a Wireless Local Area Network (WLAN), a Wide Area Network (WAN), a Personal Area Network (PAN), Bluetooth, Near Field Communication (NFC), a satellite broadcast network, an analog broadcast network, a DMB Digital Multimedia Broadcasting (DMB) network, and similar networks. The examples of the network 50 are not limited thereto and may include various wired or wireless communication networks.

The unmanned terminal apparatus 100 may operate in response to the execution of the store management mode. Accordingly, the unmanned terminal apparatus 100 may be communicatively connected to the plurality of apparatuses (e.g., 200, 300, and 400), within the store, through the network 50 employing at least one communication protocol.

The plurality of apparatuses (e.g., 200, 300, and 400), which are communicatively connected to the unmanned terminal apparatus 100, may include the display apparatus 200, the mobile robot 300, and the environmental control apparatuses 400 within the store.

Examples of the display apparatus 200 may include a plurality of display apparatuses distinguishable based on respective users or installation locations, such as a monitor apparatus for the manager, a customer tablet, and other functionally similar apparatuses. The monitor apparatus for the manager is an apparatus that provides functions associated with the manager's tasks. Examples of the manager monitor apparatus may include a POS (Point of Sale) terminal, a tablet PC, an IoT apparatus, and other functionally similar apparatuses. The customer tablet is an apparatus provided to display a menu and receive an order, as input, from a customer. The customer tablet may be an IoT apparatus, such as a tablet PC, a mobile phone, or a wearable device, that is provided to each store, table, or customer.

Example of the mobile robot 300 may include a plurality of mobile robots, such as a delivery robot and a guide robot, that are distinguished based on the intended use.

The delivery robot performs the function of delivering a product or food item, ordered by a customer within the store, to the location of the customer. The guide robot guides a customer to a location associated with the use of facilities and provides various information such as usage instructions. Both the delivery robot and the guide robot may autonomously travel within or around the store to perform respective designated functions. In addition, both the delivery robot and the guide robot may include various output means associated with a touch screen, a sound output unit, LEDs, and a tactile sensor to provide necessary information or guidance to a customer in various modalities (including visual, auditory, and tactile modalities).

The environmental control apparatuses 400 within the store are facility apparatuses that may monitor and appropriately modify an environment within the store. For example, the environmental control apparatuses 300 include a system air conditioner 310, the lighting equipment 320, and an air purifier 330.

The environmental control apparatuses within the store may measure and collect information, such as temperature, humidity, CO₂ concentration, fine dust concentration, illumination, and sunlight intensity within the store, through sensors installed in at least one region of the store. The environmental control apparatuses, such as the system air conditioner 310, the lighting equipment 320, or the air purifier 330, may operate to maintain or adjust an environment within the store to an optimal state, using the measured and collected information..

The store-integrated management system 1000 may operate to receive a first signal, corresponding to one operating mode selected from among a plurality of operating modes through the unmanned terminal apparatus 100, from a server (not illustrated), using at least one protocol.

When the server (not illustrated) that receives the first signal analyzes the received first signal and generates a second signal containing operating mode information corresponding to (selected based on) the first signal, or transmits the first signal as is, each of the plurality of apparatuses (e.g., 200, 300, and 400) within the store may receive the transmitted first signal and simultaneously start respective operations suitable for the corresponding operating mode.

That is, a manager does not need to directly operate each apparatus within the store, nor only operate or control only some apparatuses intended to function in conjunction with one another. Instead, the manager may operate all apparatuses within the store in a state of proper functionality, by inputting the current sales stage status a single time, thereby enabling a context-aware integrated store operation.

In FIG. 1, the unmanned terminal apparatus 100 (e.g., a kiosk), the display apparatuses 200 (e.g., a manager apparatus, such as a monitoring apparatus for management (POS terminal), and a customer tablet (e.g., a customer apparatus)), the mobile robot 300 (e.g., a delivery robot or guide robot), the environmental control apparatuses 400 (e.g., the system air conditioner 310, the lighting equipment 320, and the air purifier 330) are illustrated as the apparatuses included in the integrated store management system 1000. However, the integrated store management system 1000 is not limited thereto and may include more apparatuses (e.g., a television (TV), signage, a steam clothing care system (e.g., an LG styler), a washing machine, an oven, and the like) within the store that operate in conjunction with one another and with the above-mentioned apparatuses within the store.

In addition, the unmanned terminal apparatus 100 for performing the operating mode control 110 to expand the range of applications of the kiosk is described, taking the kiosk as an example. However, it is noted that in a situation where the kiosk is not installed within the store, where the kiosk is inoperable due to a malfunction, or where the operating mode control 110 may be performed only remotely because the manager is outside the store, another unmanned terminal apparatus, such as the manager's mobile phone, PC, tablet PC, laptop PC, or wearable device can be used.

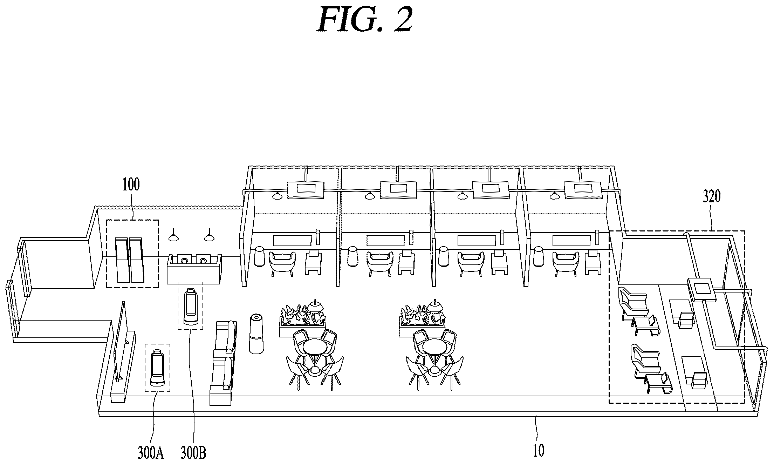

FIG. 2 is a diagram illustrating the interior of a store 10 in which the integrated store management system according to the present disclosure, for example, the integrated store management system 1000 described with reference to FIG. 1, is installed.

With reference to FIG. 2, the kiosk is utilized as the unmanned terminal apparatus 100 for selecting the plurality of operating modes. The store management mode may be executed through a touch screen of the unmanned terminal apparatus 100. At this point, the manager may perform a suitable user authentication procedure to execute the store management mode through the kiosk.

When the store management mode is executed, screen information for performing the operating mode control 110 may be displayed on the touch screen of the unmanned terminal apparatus 100.

When the store management mode is executed, the unmanned terminal apparatus 100 and a plurality of apparatuses within the store 10 may be communicatively connected to one another. For example, the plurality of apparatuses may include mobile robots 300A and 300B, the environmental control apparatuses, such as the lighting equipment 320, and the display apparatus, such as the customer tablet PC.

The manager or an authorized user may select an operating mode corresponding to the current sales stage status from among the plurality of operating modes through the unmanned terminal apparatus 100.

The plurality of operating modes may include a first operating mode corresponding to a 'sales preparation' status, a second operating mode corresponding to a 'sales-in-progress' status, a third operating mode corresponding to a 'sales wrap-up' status, and a fourth operating mode corresponding to a 'sales closure' status.

In an embodiment, the second operating mode corresponding to the sales-in-progress status may be subdivided based on an operating method. For example, the second operating mode may include a sub-operating mode for use in the absence of the manager. In addition, for example, the second operating mode may include sub-operating modes for mature business, weekend business, night business, and the like which are obtained by subdividing the second operating mode based on business period, day of the week, and time. In addition, for example, the second operating mode may also include sub-operating modes that are obtained by subdividing the second operating mode based on the number and density of visiting customers.

Each of the plurality of apparatuses within the store may recognize a sales stage status corresponding to an operating mode selected through the unmanned terminal apparatus 100 and may start an operation associated with the selected operating mode.

In an embodiment, operations of each of the plurality of apparatuses, which are associated with the selected operating mode, may include changing at least one of the following: an operational state, control mode, screen state, location, function in progress, or traveling method of each apparatus, each of which corresponds to the selected operating mode.

For example, in a case where an operating mode corresponding to the 'sales preparation' status is selected in FIG. 2, the lighting equipment 320 within the store 10 may perform an operation corresponding to sales preparation, such as entering a powered-on state, and the mobile robots 300A and 300B may perform operations corresponding to sales preparation, such as turning on a screen, outputting an opening message (e.g., 'Good morning'), and moving to a designated location.

The processor and memory of each of the plurality of apparatuses within the store may operate in conjunction such that the respective apparatus performs an operation appropriate to each operating mode. To this end, the processor of each apparatus may access the memory, retrieve information regarding an operation that is set in accordance with each operating mode, and control an operation corresponding to the retrieved information.

In addition, in some embodiments, the plurality of apparatuses within the store may be set to perform operations associated with the selected operating mode sequentially in a specific sequence.

When the operating mode corresponding to the 'sales preparation' status is initiated, the plurality of apparatuses may perform a sequence of operations in response to entry into the sales preparation status as if the plurality of apparatuses were manually powered on by the manager. For example, the lighting equipment 320 first performs the operation of entering a powered-on state, the display apparatus 200 is then powered on, and the mobile robot 300 subsequently outputs an opening message and moves to a designated location.

In this manner, when the plurality of apparatuses change state as a result of performing the operations associated with the selected operating mode, the state data of each apparatus may be transmitted to the manager apparatus, the unmanned terminal apparatus, or the integrated server. For example, a change to the state data of each apparatus within the store may be received by a POI apparatus and be displayed on the screen.

The store-integrated management system 1000 according to the present disclosure is not only applicable to a store having a layout similar to that of the store 10 illustrated in FIG. 2 or to a single store, but may also be applicable to stores having various layouts and to a plurality of stores.

For example, in a case where one manager manages a plurality of stores, by selecting an operating mode a single time through an unmanned terminal apparatus (e.g., a kiosk) within a single store or a remote unmanned terminal apparatus (e.g., a mobile phone), the manager may simultaneously change or control the sales stage statuses of the plurality of stores.

In this manner, instead of merely conveniently replacing a part of the store operation, the integrated store management system of the present disclosure may intervene in the entire store operation process and thus may perform a context-aware integrated store operation, thereby minimizing reliance on operational personnel and enabling rapid and providing a convenient integrated operational solution.

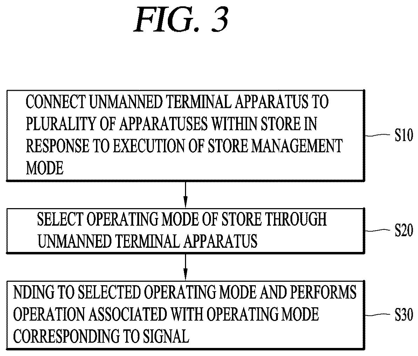

FIG. 3 is a representative flowchart illustrating an integrated store management method according to the present disclosure.

Each step of the method illustrated in FIG. 3 may be performed by the integrated store management system 1000 or the main processor thereof.

Specifically, each step of the method illustrated in FIG. 3 may be performed through the unmanned terminal apparatus that constitutes the integrated store management system, the server that communicates with the unmanned terminal apparatus, or the processor of each of the plurality of apparatuses that operate in conjunction with the unmanned terminal apparatus. In some embodiments, steps may be performed in an integrated manner by the central server or main processor that controls or manages the integrated store management system.

With reference to FIG. 3, the integrated store management system 1000 may communicatively connect the unmanned terminal apparatus to the plurality of apparatuses within the store in response to the execution of the store management mode (S10).

The store management mode may be executed through input from the unmanned terminal apparatus 100 (in FIG. 1). For example, the store management mode may be executed through an input for enabling a switch from the usage mode of the unmanned terminal apparatus 100, for example, the kiosk within the store, to a manager mode.

At this point, the unmanned terminal apparatus 100 may require a user authentication procedure (e.g., password input or biometric authentication) to switch to the manager mode.

When the store management mode is executed in this manner, a screen (a 'first screen') for selecting one operating mode from among the plurality of operating modes may be displayed on a touch screen of the unmanned terminal apparatus. Using the first screen on the unmanned terminal apparatus 100, one operating mode may be selected from among the plurality of operating modes to serve as the store operation (S20).

At this point, the selection of the store operating mode using the first screen may be performed either by a single touch gesture from the manager or solely upon satisfaction of a preset condition (e.g., when an execution time of each operating mode is reached). That is, to select the store operating mode, the plurality of apparatuses within the store may simultaneously recognize the current sales stage status in response to a single touch gesture, without requiring a complex procedure or significant effort.

At this point, the plurality of operating modes may be categorized into first through fourth operating modes that are matched with the 'sales preparation,' 'sales-in-progress,' 'sales wrap-up,' and 'sales closure' statuses, respectively. However, this categorization is not necessarily intended to limit the operating modes of the store to these four operating modes. One or more operating modes may be added or omitted as needed.

Among the plurality of operating modes, a change from one operating mode to another indicates a change in the sales stage status. Each of the plurality of apparatuses within the store may receive a signal containing this information, thereby enabling identification of both a change in the sales stage status and the updated sales stage status.

In addition, the plurality of apparatuses may include two or more selected from the following: one or more display apparatuses, a mobile robot, and lighting equipment, each of which is provided within the store.

Subsequently, each of the plurality of apparatuses within the store may receive a signal corresponding to the selected operating mode through the unmanned terminal apparatus 100, and may perform an operation associated with an operating mode corresponding to the received signal (S30).

Operations associated with the operating mode corresponding to the received signal may include changing at least one of the following: an operational state (e.g., powered-on or powered-off state), control mode (e.g., transition of the mobile robot from a guide mode to a customer reception or accompanying mode), screen state (e.g., turned-on or turned-off state of the screen or screen change corresponding to a sales stage status), location (designated location of the mobile robot), function in progress, or traveling method (e.g., adjustment of a traveling path, traveling speed, or similar parameter of the mobile robot) of each apparatus, each of which corresponds to the selected operating mode.

In some embodiments, the plurality of apparatuses within the store may be set to perform operations associated with the selected operating mode sequentially in a specific sequence. Additionally, the state data of each of the plurality of apparatuses may be transmitted to the manager apparatus, the unmanned terminal apparatus, or the integrated server, thereby displaying the state of each apparatus within the store.

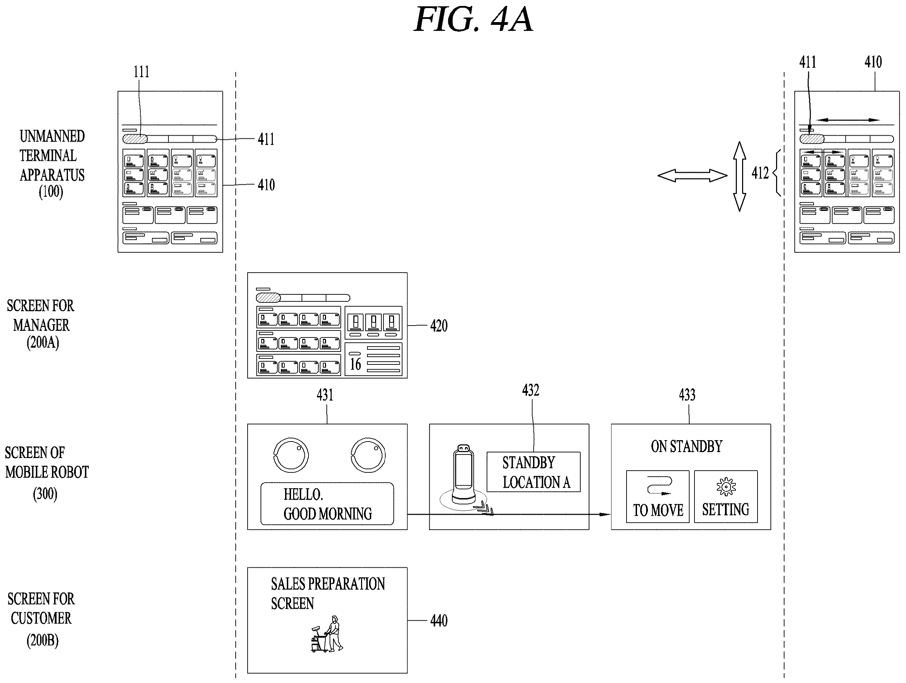

Examples in which the plurality of apparatuses within the store respectively perform operations associated with each sales stage status a single time are described in detail below with reference to FIGS. 4A, 4B, 5, 6A, 6B, 6C, 7A, and 7B.

In the integrated store management system 1000 according to the present disclosure, the unmanned terminal apparatus 100 (in FIG. 1) may be an apparatus within the store that includes a touch screen, for example, a kiosk. In addition, the screen (the 'first screen') displayed on the touch screen of the unmanned terminal apparatus 100 may be used to select one operating mode from among the plurality of operating modes through the unmanned terminal apparatus 100.

The first screen may be displayed in response to execution of the store management mode in the unmanned terminal apparatus 100 to perform the operating mode control 110. For example, the execution of the store management mode may involve procedures such as login and user authentication.

The first screen may include a user interface that enables direct access to any of the plurality of operating modes. The configuration and operation of the first screen may be described in detail below with reference to FIGS. **4A** to 8.

The plurality of operating modes, which are obtained by dividing the sales stage statuses of the store in a context-aware manner, may be categorized into four modes: a first operating mode corresponding to 'sales preparation,' a second operating mode corresponding to 'sales-in-progress,' a third operating mode corresponding to 'sales wrap-up,' and a fourth operating mode corresponding to 'sales closure.' However, the plurality of operating modes is not intended to be limited to these four operating modes resulting from the categorization. One or more operating modes may be added or omitted. Each operating mode may be subdivided into one or more sub-operating modes.

The plurality of operating modes may include respective information regarding sales stage statuses, each operating mode being matched with a corresponding sales stage status. Therefore, among the plurality of operating modes, a change from one operating mode to another indicates a change in the sales stage status. Each of the plurality of apparatuses may receive a signal containing this information, thereby enabling identification of both a change in the sales stage status and the updated sales stage status.

For example, upon a change from the first operating mode to the second operating mode, all the apparatuses within the store recognize the change from the 'sales preparation' status to the 'sales-in-progress' status and perform operations corresponding to the sales-in-progress status either simultaneously or in a preset sequence.

According to an embodiment, the operating mode selected from among the plurality of operating modes displayed on the first screen corresponds to a specific operating mode matched with the sales-in-progress status of the store among the plurality of operating modes.

According to the present disclosure, with a single input (e.g., one touch), each of the plurality of apparatuses within the store may recognize the current sales stage status and perform an operation corresponding thereto. That is, once a single input is applied through the unmanned terminal apparatus (using the first screen) to provide a notification of the current sales stage status, all the apparatuses within the store will start to operate in an integrated manner in accordance with the sales stage status, without the need to operate at least some of the apparatuses within the store either directly or in conjunction. Therefore, during sales preparation, the manager is no longer required to individually turn on the display and the environmental control apparatuses within the store and to directly operate the mobile robot within the store.

The collective operations of the apparatuses within the store that are triggered by the selection of each operating mode are described in detail below.

### [First operating mode - sales preparation status]

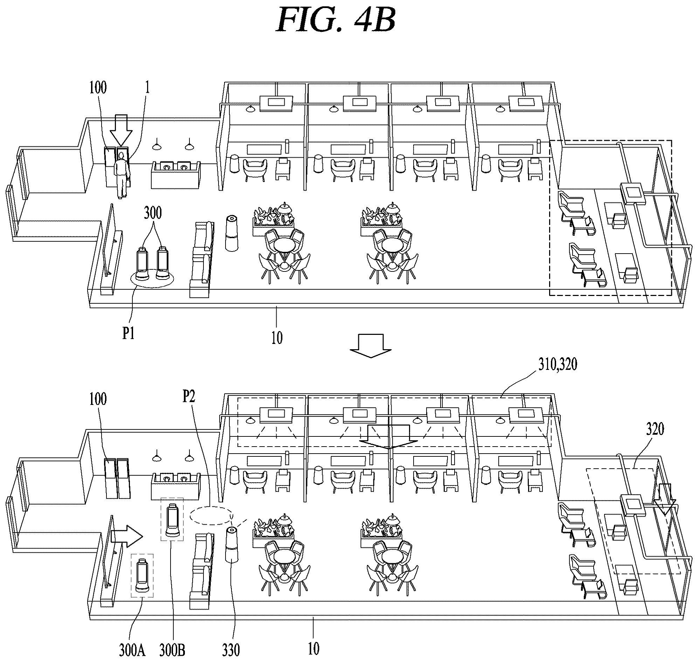

FIGS 4A and 4B are diagrams illustrating the operations of the apparatuses within the store and associated screen transitions that are triggered by the selection of the 'first operating mode corresponding to the sales preparation' within the store. Examples of operations associated with the operating mode corresponding to the 'sales preparation,' which is selected through the operating mode control 110 in the unmanned terminal apparatus 100, are described below with reference to FIGS. 4A and 4B.

With reference to FIG. 4A, in response to the execution of the management mode on the touch screen of the unmanned terminal apparatus 100, for example, the kiosk, a first screen 410, which includes an indicator 411 for displaying multiple selectable operating modes, may be displayed.

Based on a touch gesture on the first screen 410, a first operating mode 111 matched with the sales preparation status may be selected using the indicator 411 for displaying multiple selectable operating modes.

The indicator 411 for displaying multiple selectable operating modes may be configured in the form of multiple tabs or in the form of a horizontally sliding progress bar. However, the indicator 411 for displaying multiple selectable operating modes is not limited to these forms and may be configured in various other forms. The touch gesture on one of the plurality of operating modes may be performed with a single input. Examples of the touch gesture may include a single touch input, a horizontal swipe gesture, and other similar gestures.

In response to the selection, as input, of the first operating mode 111, the first operating mode 111 selected using the indicator 411 for displaying multiple selectable operating modes is displayed in an activated manner. Then, when the first operating mode 111 is selected as input, a signal indicating the sales stage status, that is, the 'sales preparation' status is transferred to each apparatus within the store (through the server).

A display apparatus within the store, for example, a manager apparatus 200A, recognizes the sales preparation status corresponding to the first operating mode, activates a screen of the manager apparatus, and initiates a splash screen of a store management application, thereby displaying a sales preparation screen 420.

Another apparatus within the store, for example, a customer apparatus 200B, also recognizes the sales preparation status corresponding to the first operating mode, activates the display, and initiates the splash screen of the store management application. Accordingly, for example, a sales preparation screen 440 that includes a checklist for sales preparation may be displayed.

The mobile robot 300 within the store recognizes the sales preparation status corresponding to the first operating mode, outputs an opening message 431 on a screen of the mobile robot 300, and then autonomously moves to a designated place (e.g., standby place A) (432). After the mobile robot 300 moves to the designated place, a sales preparation standby screen 433 may be displayed on the screen thereof.

In addition, although not illustrated, the environmental control apparatuses 400 within the store, such as a system air conditioner, lighting equipment, and an air purifier, which recognize the sales preparation status corresponding to the first operating mode, may enter respective powered-on states and then may maintain respective sales preparation standby statuses.

While the indicator 411 for displaying multiple selectable operating modes is displayed on the first screen 410, a sub-selection menu 412 activated for the selected operating mode, that is, for the first operating mode, may also be displayed. The activated sub-selection menu 412 may include modifiable detailed functions or operations of an apparatus within the store, in the selected operating mode, that is, the first operating mode.

The activated sub-selection menu 412 may be implemented to allow horizontal scrolling and/or vertical scrolling. Each of the functions or operations on the activated sub-selection menu 412 may switch to a deactivated state in response to a touch input thereto.

For example, in a case where a touch input to a robot traveling menu on the sub-selection menu 412 activated for the first operating mode is received, a function corresponding to the robot traveling menu may switch to a deactivated state. This state change information may also be transferred to the mobile robot, thereby enabling the mobile robot to change the detailed operation thereof corresponding to the first operating mode. In FIG. 4A, the mobile robot 300 may display only the operation preparation standby screen 433 at the current location thereof without moving to the designated place, after outputting the opening message 431 on the screen thereof.

Subsequently, with reference to FIG. 4B, the selection of the first operating mode and the flow of integrated control of the plurality of apparatuses within the store, triggered by the selection, are described.

As illustrated in FIG. 4B, a manager 1 may execute the store management mode using the unmanned terminal apparatus 100, for example, the kiosk installed at the entrance of the store 10 (after performing login and user authentication procedures, or similar operations). Then, the manager 1 may select the first operating mode corresponding to the sales preparation status by applying a single touch input to the first screen displayed in response to the execution of the store management mode. Then, all the apparatuses within the store that receive a signal corresponding to the first operating mode perform respective operations for entering the sales preparation status.

Accordingly, for example, the mobile robot 300 within the store moves from an initial location P1 to a designated location P2, the air purifier 330, one of the environmental control apparatuses, operates, and the system air conditioner 310 and the lighting equipment 320 switch to a powered-on state, thereby remaining in a standby mode until the start of business. The manager 1 does not need to individually turn on the apparatuses within the store or perform individual or group control of the apparatuses that operate in conjunction with one another before sales hours. Accordingly, the number of management personnel can be minimized, and the efficiency of sales preparation can be maximized while reducing the workload and time required of the manager.

### [Second operating mode - sales-in-progress status]

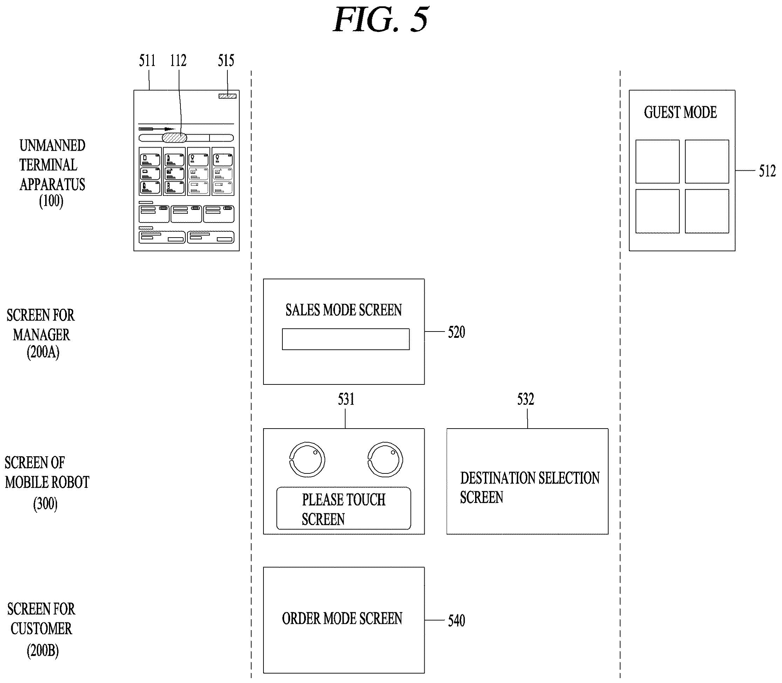

Examples of operations associated with the operating mode corresponding to the 'in-sales preparation,' which is selected through the operating mode control 110 in the unmanned terminal apparatus 100, are described below with reference to FIG. 5.

With reference to FIG. 4A, a second operating mode 112 matched with the sales-in-progress status may be selected from a first screen 511 displayed on the touch screen of the unmanned terminal apparatus 100, that is, the kiosk.

For example, using the indicator 411 for displaying multiple selectable operating modes (in FIG. 4A), the second operating mode 112 may be executed in response to a touch gesture (e.g., a touch gesture that drags the slider of the progress bar to the right) that causes a switch to the second operating mode 112 while the first operating mode 111 (in FIG. 4A) is being executed.

At this point, an icon indicating a usage mode of the kiosk or a switchable usage mode of the kiosk may be displayed in a region of the first screen 511, for example, in the upper-right corner thereof. For example, a 'manager mode' that is the current usage mode of the kiosk may be displayed in an activated state in the upper-right corner of the first screen 511, or a 'guest mode" may be displayed in a deactivated state thereon. The displayed icon may include a toggle function for switching the usage mode of the kiosk.

In response to the selection, as input, of the second operating mode 112, the second operating mode 112 is displayed in an activated state on the first screen 511. Then, when the second operating mode 112 is selected as input, a signal indicating the sales stage status with which the second operating mode 112, that is, the 'sales-in-progress' status is transferred to each apparatus within the store (through the server).

The display apparatus within the store, for example, the manager apparatus 200A, may recognize the sales-in-progress status corresponding to the second operating mode and switch from the sales preparation screen 420 (in FIG. 4A) to a sales mode screen 520 for display.

Another display apparatus within the store, for example, the customer apparatus 200B, switches to an order mode screen 540 in response to the recognition of the sales-in-progress status corresponding to the second operating mode.

The mobile robot 300 within the store may recognize the sales preparation status corresponding to the second operating mode, and may perform the function of the guide robot or the delivery robot such that a destination selection screen 532 is displayed on the screen of the mobile robot based on an input applied to a sales-in-progress standby screen 531 by a customer or host.

In addition, although not illustrated, the environmental control apparatuses 400 within the store, which recognize the sales-in-progress status corresponding to the second operating mode, collect environmental information, such as temperature, humidity, CO₂ concentration, fine dust concentration, illumination, and solar radiation quantity, and adjust themselves to maintain an optimal store environment during sales hours.

In a case where a switch occurs from the first operating mode to the second operating mode using the first screen 511, a sub-selection menu activated for the selected operating mode may also be changed. For example, a sub-selection menu deactivated in the sales preparation status with which the first operating mode is matched may be activated in the sales-in-progress status with which the second operating mode is matched. The manager may adjust a detailed function in the current operating mode through the activated sub-selection menu.

In addition, according to an embodiment, in response to the operating mode being selected using the first screen displayed on the touch screen of the unmanned terminal apparatus 100, a second screen associated with the selected operating mode may be displayed on the touch screen. That is, the unmanned terminal apparatus 100 may automatically switch from the usage mode thereof for performing the operating mode control 110 to the usage mode thereof for processing a customer order, thereby expanding the utilization range of the unmanned terminal apparatus 100, i.e., the kiosk.

For example, in FIG. 5, even while the unmanned terminal apparatus 100, i.e., the kiosk, is used in the manager mode, either when a predetermined period of time elapses after executing the second operating mode matched with the sales-in-progress status, or when a touch gesture is performed on a display of the usage mode of the unmanned terminal apparatus 100, including a toggle key function, the kiosk may switch from the manager mode to a guest mode 512 for order processing. This results from applying the sales mode screen for order processing, which corresponds to the selected operating mode, to the kiosk.

Since transitioning from the sales-in-progress status to a subsequent operating mode (such as the sales wrap-up or closure status) generally takes a considerable amount of time, an automatic switch occurs to perform the inherent functions of the kiosk, thereby expanding the scope of utilization of the kiosk.

### [Subdivision of the second operating mode - the absence of the manager during sales hours]

During the execution of the second operating mode corresponding to the sales-in-progress status, in some cases, the operating mode needs to be subdivided for modification.

For example, in a case where the manager is temporarily absent, where there is a surge in visiting customers, or where a sales form varies depending on the sales hour, the second operating mode needs to be subdivided for execution. Specifically, even when the manager is temporarily absent, it may be desirable to change the operations of some of the apparatuses within the store such that adequate sales-related service is provided to customers visiting the store.

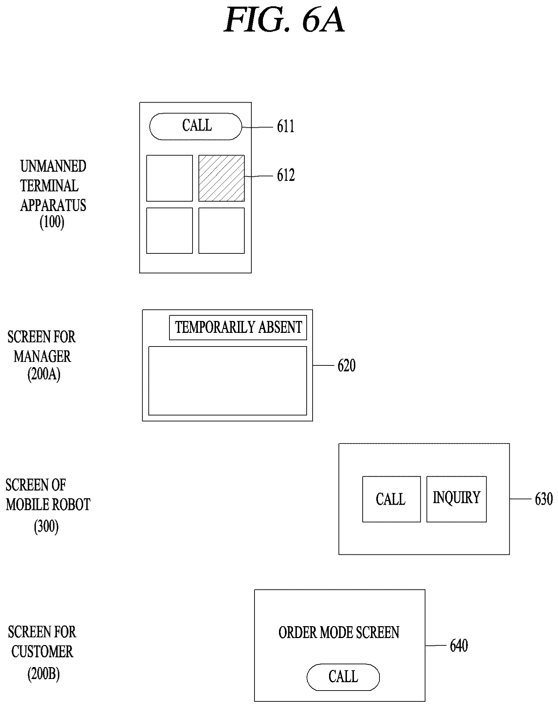

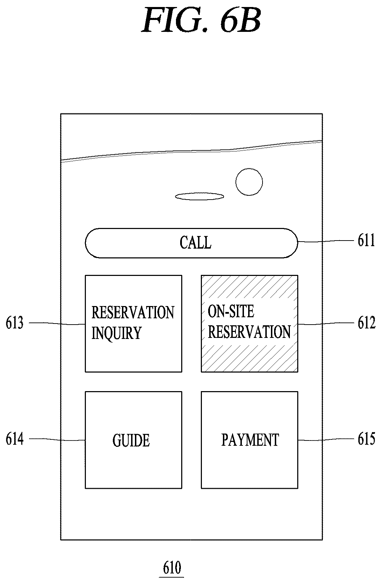

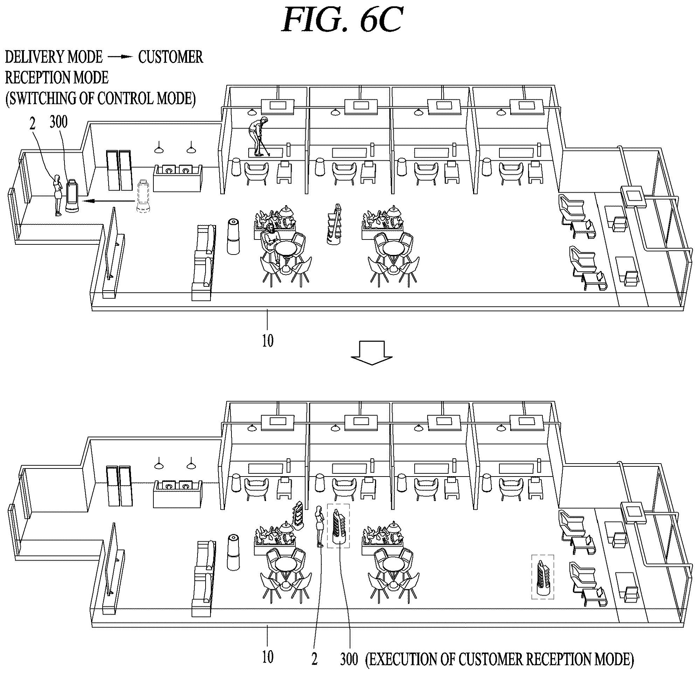

FIGS. 6A, 6B, and 6C are diagrams illustrating an example of an operation of an operating mode, among the operating modes in FIG. 5, that is modified in response to the absence of the manager.

During the execution of the second operating mode, when an input providing a notification of the 'absence of the manager' is received, a signal corresponding to the reception of the input is transferred to the plurality of apparatuses within the store. Then, at least one of the plurality of apparatuses within the store may modify at least one of the following: a current control mode, a screen state, a location, a function, or an operational state, in such a manner as to perform an operation corresponding to the absence of the manager, and may perform the corresponding operation.

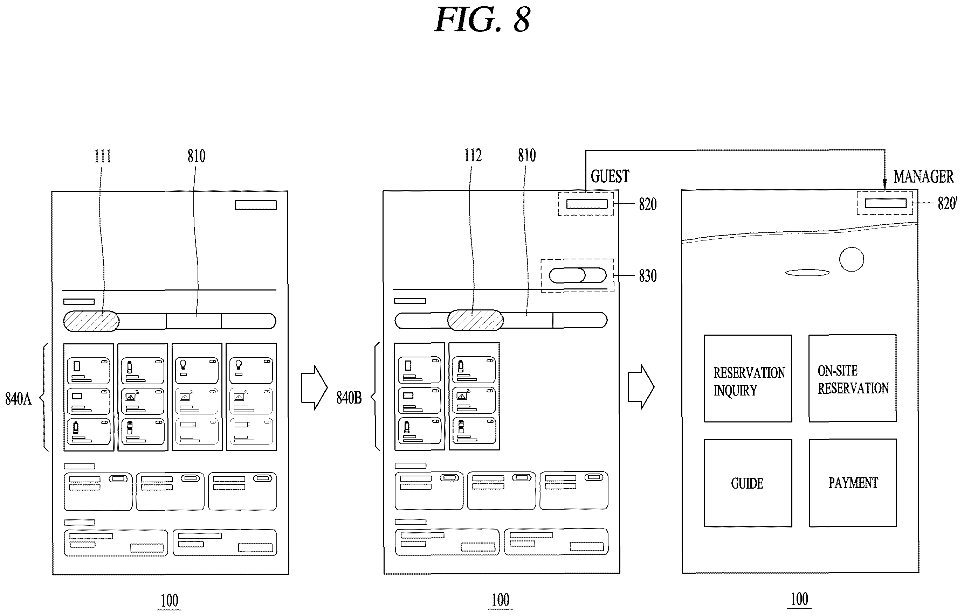

Specifically, an input providing a notification of the absence of the manager may be generated only by applying a single touch either to a specific key on a screen 511 or to a specific region of the screen 511 of the unmanned terminal apparatus 100 illustrated in FIG. 5, while maintaining the current sales-in-progress status. A specific UX associated with this is described in detail below with reference to FIG. 8.

With reference to FIGS. 6A to 6C, an operation corresponding to the absence of the manager, which is performed by at least one of the plurality of apparatuses within the store, is described.

In response to the performance of the operation corresponding to the 'absence of the manager' during the execution of the second operating mode, the unmanned terminal apparatus 100 may switch to the guest mode for processing a customer order. When the touch screen of the unmanned terminal apparatus 100 switches to the guest mode, the touch screen may include a call function 611 for calling or summoning an employee for assistance and an on-site reservation menu 612 for processing an on-site reservation without the need for a manager.

Specifically, with reference to FIG. 6B, the call function 611, the on-site reservation menu 612, a reservation inquiry menu 613, a guide menu 614, and a payment menu 615 may be displayed on the guest mode screen 610 of the kiosk.

A customer may request assistance by touching the call function 611 on the guest mode screen 610 to connect to another employee (or automatically call the mobile phone of the absent manager). The customer may also receive assistance by selecting the guide menu 614 to access stored Q&A information or through the nearby mobile robot 300. In addition, when the on-site reservation menu 612 is selected, the mobile robot 300 within the store may approach the location of the unmanned terminal apparatus 100 near which the customer is present, in order to process an on-site reservation and guide the customer to a seat on behalf of the absent manager.

In response to the performance of the operation corresponding to the 'absence of the manager,' the manager apparatus 200A may display an absence management screen 620 on the touch screen, and an absence toggle button may be activated on the absence management screen 620. An order mode screen 640 with which the existing second operating mode is matched may be displayed in the customer apparatus 200B in the same manner. At this time, a call menu for summoning or calling an employee may be included in the order mode screen 640.

In response to the performance of the operation corresponding to the 'absence of the manager,' the mobile robot 300 may switch the control mode on behalf of the manager. Specifically, the absence notification message 'The manager is now absent. May I help you?' may be displayed on the display of the mobile robot 300.

In addition, the mobile robot 300 may move to the location of the unmanned terminal apparatus 100 to prepare for serving a customer on behalf of the manager and may automatically change the control mode to suit customer needs.

For example, with reference to FIG. 6C, in response to the performance of the operation corresponding to the 'absence of the manager,' the mobile robot 300 within the store 10 moves to the vicinity of the unmanned terminal apparatus 100. The unmanned terminal apparatus 100, i.e., the kiosk, is typically installed near the entrance of the store, and thus may quickly recognize a customer entering the store.

With reference to FIG. 6C, when a customer 2 enters the store 10, the mobile robot 300, which is on standby beside the unmanned terminal apparatus 100, may initiate an approach toward the customer 2. To this end, the mobile robot 300 may switch the control mode corresponding to the sales-in-progress status in response to the performance of the operation corresponding to the absence of the 'manager absence.' For example, the mobile robot 300 may automatically switch from a 'delivery mode,' in which a product or food ordered by a customer is delivered, to a 'customer reception mode,' thereby moving to the vicinity of the unmanned terminal apparatus 100.

Subsequently, when the customer 2 enters the store 10 and completes an on-site reservation with the assistance of the mobile robot 300, the mobile robot 300 may switch to the 'guide mode' for guiding the customer 2 to a table. Accordingly, the robot 300 may guide the customer 2 to the table while adjusting a traveling speed thereof in order for the customer 2 to follow the robot 300.

Although not illustrated, when the manager returns to the store 10 and applies an input for canceling the absence of a manager, the plurality of apparatuses within the store may resume the operations corresponding to the sales-in-progress status maintained prior to performing the operations corresponding to the absence of the manager. At this point, the state data (recorded during the absence of the manager) of each of the plurality of apparatuses within the store may be transmitted to the manager apparatus and/or the unmanned terminal apparatus such that the manager can promptly recognize the situation of the store that occurred during the absence of the manager.

In this manner, according to the present disclosure, while the manager is absent during sales hours, the apparatuses within the store, which operate in conjunction with one another, switch respective operating modes appropriately, thereby performing a context-aware integrated store operation. Consequently, a context-aware integrated store solution is provided by distinguishing between the presence and absence of the manager.

### [Third operating mode and fourth operating mode - the sales wrap-up and the sales closure]

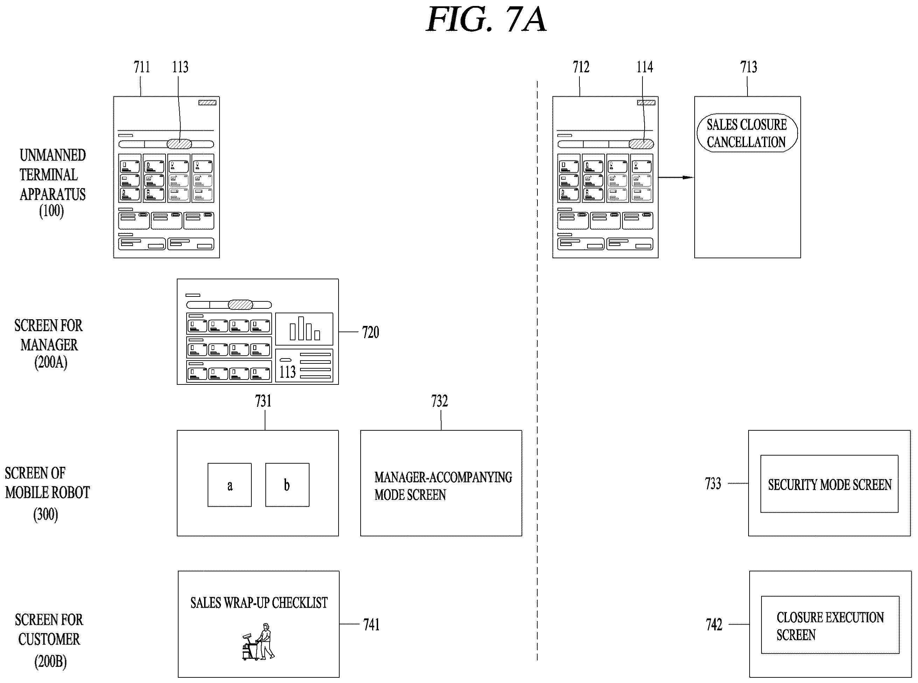

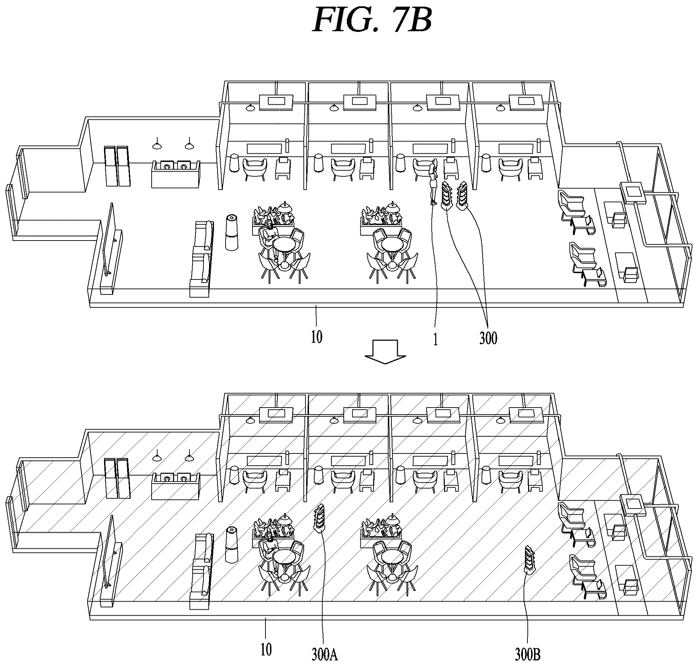

FIGS. 7A and 7B are diagrams respectively illustrating examples of operations associated with the operating modes corresponding to the 'sales wrap-up' and the 'sales closure,' which are selected through the operating mode control 110 in the unmanned terminal apparatus 100.

In the related art, when the store closes, the manager is required to tidy up the store. Then, the manager either individually turns off the plurality of apparatuses within the store or manually turns off at least some of them. However, according to the present disclosure, only when the manager applies a single input notifying the plurality of apparatuses of the current sales stage status, i.e., the 'sales wrap-up' or the 'sales closure,' each of the plurality of apparatuses within the store assists in maintaining the current sales stage status or performs an appropriate operation corresponding to the current sales stage status.

The left side of FIG. 7A illustrates operations of the plurality of apparatuses, which are performed in accordance with the execution of the third operating mode corresponding to the 'sales wrap-up' status.

The third operating mode may be executed through a single input applied to a screen 711 for executing the operating mode control displayed on the touch screen of the unmanned terminal apparatus 100. For example, in response to a touch gesture for switching to a third operating mode 113 (e.g., a touch gesture that drags the slider of the progress bar to the right), the third operating mode 113 may be executed.

The plurality of apparatuses within the store may receive a signal corresponding to the selected third operating mode 113, recognize the sales wrap-up status with which the third operating mode 113 is matched, and perform respective operations associated with the recognized sales wrap-up status (either simultaneously or sequentially). For example, in response to the execution of the third operating mode 113, the plurality of apparatuses with the store may perform respective operations associated with the sales wrap-up mode.

Specifically, a sales wrap-up screen 720 corresponding to the third operating mode 113 may be displayed on a touch screen of the manager apparatus 200A, which is one of the display apparatuses within the store. In addition, a screen 741 that includes a sales wrap-up checklist may be displayed on a touch screen of the customer apparatus 200B, which is another display apparatus within the store.

In response to the execution of the third operating mode 113, after a sales wrap-up standby screen 731 is displayed, the mobile robot 300 within the store may execute a manager-accompanying traveling mode to assist the manager in the sales wrap-up by following the manager. While the mobile robot 300 executes the manager-accompanying traveling mode, an associated manager-accompanying mode screen 732 may be displayed on the touch screen.

The right side of FIG. 7A illustrates operations of the plurality of apparatuses, which are performed in accordance with the execution of the fourth operating mode, which corresponds to the 'sales closure' status.

When the sales wrap-up is completed, the manager may select a fourth operating mode 114 that is matched with the 'sales closure' status, using a screen 712 for executing the operating mode control displayed on the touch screen of the unmanned terminal apparatus 100.

In response to the selection, as input, of the fourth operating mode 114, a cancellation screen 713 for canceling the sales closure may be displayed on the screen 712 for a predetermined time (e.g., 10 seconds). The manager does not need to respond to the cancellation screen 713 to execute the sales closure. That is, when the manager leaves the store, upon the lapse of a predetermined time, the cancellation screen 713 is no longer displayed, and the sales closure is executed.

When an input is applied to the cancellation screen 713, the screen 711 on the left side of FIG. 7A may resume being displayed without executing the sales closure. That is, returning to the sales closure status allows the manager to execute the previously omitted wrap-up.

After the cancellation screen 713 is displayed, when the sales closure is executed, the plurality of apparatuses within the store may perform respective operations associated with the sales closure.

For example, the display apparatuses 200A and 200B within the store execute a screen shutdown. For example, when a predetermined time elapses after a closure execution screen 742 is displayed on a touch screen of the customer apparatus, the display switches to a turned-off state.

In response to the sales closure, the mobile robot 300 within the store may switch to a store security mode and perform operations associated therewith. Accordingly, a security mode screen 733 may be displayed on a touch screen of the mobile robot 300. At this point, when the remaining battery level of the mobile robot 300 falls below a reference value, the store security mode and a charging mode for battery charging may be executed.

The environmental control apparatuses, such as the system air conditioner 310, the lighting equipment 320, and the air purifier 330, may automatically switch to respective powered-off states in response to the sales closure.

FIG. 7B illustrates an example in which integrated control of the sales wrap-up and the sales closure is seamlessly performed through the operating mode control 110 by the unmanned terminal apparatus 100.

In FIG. 7B, when the third operating mode matched with the sales wrap-up is entered, while accompanying the manager 1, the mobile robot 300 within the store performs operations for assisting the manager 1 in the sales wrap-up, such as carrying cleaning tools and holding collected waste. Subsequently, after the fourth operating mode corresponding to the sales closure is entered and when the manager leaves the store, all lighting equipment within the store is powered off, and at least one of the mobile robots 300A and 300B switches to the store security mode for monitoring the store and check conditions within the store.

FIG. 8 is a diagram illustrating an example of a screen for operating the unmanned terminal apparatus 100 according to the present disclosure in a plurality of usage modes.

With reference to FIG. 8, when the store management mode is executed, screen information for executing the operating control mode 110 (in FIG. 1) may be displayed on the touch screen of the unmanned terminal apparatus 100.

Specifically, a progress bar or a control object 810 in the form of a tap may be displayed on the touch screen of the unmanned terminal apparatus 100. Through the progress bar of the control object 810, one operating mode may be selected from among the plurality of operating modes (e.g., the sales preparation, the sales-in-progress, the sales preparation, and the sales closure), by using a left-right sliding touch gesture.

According to the present disclosure, the operating mode may be executed or changed with a single touch gesture performed on the control object 810. The plurality of apparatuses within the store may perform respective operations associated with the sales stage status corresponding to the selected or changed operating mode, either simultaneously or sequentially.

The selectable operating mode 111 or 112 displayed on the control object 810 may include a corresponding sub-selection menu 840A or 840B, respectively.

A selection input may be applied to the sub-selection menu 840A or 840B corresponding to the operating mode. Accordingly, the unmanned terminal apparatus may transmit a signal to each of the plurality of apparatuses (through the server), the signal containing first information on the selected operating mode and second information on the selected sub-selection menu. Then, when the plurality of apparatuses within the store is to perform respective operations associated with the operating mode corresponding to the first information, the plurality of apparatuses may perform respective operations associated with the operating mode corresponding to the first information after an operation of an apparatus associated with the second information, among the plurality of apparatuses, is changed or modified.

According to an embodiment, when a switch occurs from any one of the plurality of operating modes to another by performing a touch gesture on the first screen including the control object 810, a sub-selection menu activated for each operating mode may be changed together on the first screen and may be displayed thereon. For example, in FIG. 8, when a switch occurs from the first operating mode 111 to the second operating mode 112 based on a touch gesture (e.g., a sliding touch gesture to the right) on the control object 810, the activated sub-selection menu may also change from the first sub-selection menu 840A to the second sub-selection menu 840B. That is, this switch means that a sub-selection menu adjustable in the sales preparation status and a sub-selection menu adjustable in the sales-in-progress status are provided in different configurations.

In an embodiment, the order in which the activated sub-selection menu 840A or 840B is arranged may be changed based on user input or usage history.

In a case where the kiosk is used as the unmanned terminal apparatus 100, an icon 820 indicating the scope of usage, i.e., the usage mode/switchable usage mode of the kiosk, may be displayed. For example, an icon 820 indicating a 'guest mode' that is a switchable usage mode of the kiosk may be displayed in a deactivated state in the upper right corner of a first screen of the unmanned terminal apparatus illustrated in FIG. 8. The displayed icon 820 may be implemented as a toggle key that facilitates switching the usage mode of the kiosk.

When a touch gesture is performed on the displayed icon 820, a switch may occur from the current usage mode of the kiosk to the guest mode, and an icon 820' indicating the 'manager mode' that is a switchable usage mode of the kiosk may be displayed in a deactivated state in the upper-right corner of the first screen.

The usage mode of the kiosk may be toggled to the manager mode or the guest mode based on the touch gesture performed on the icon 820 or 820'.

A switch from the manager mode to the guest mode may occur easily with just a touch on the toggle key.

When a switch occurs from the guest mode to the manager mode, login and user authentication procedures for determining whether access is permitted may be performed. Alternatively, when a user touches the toggle key corresponding to a manager mode switch in the guest mode, a message indicating the user is not allowed to have access may be displayed in the vicinity of the toggle key and may then disappear.

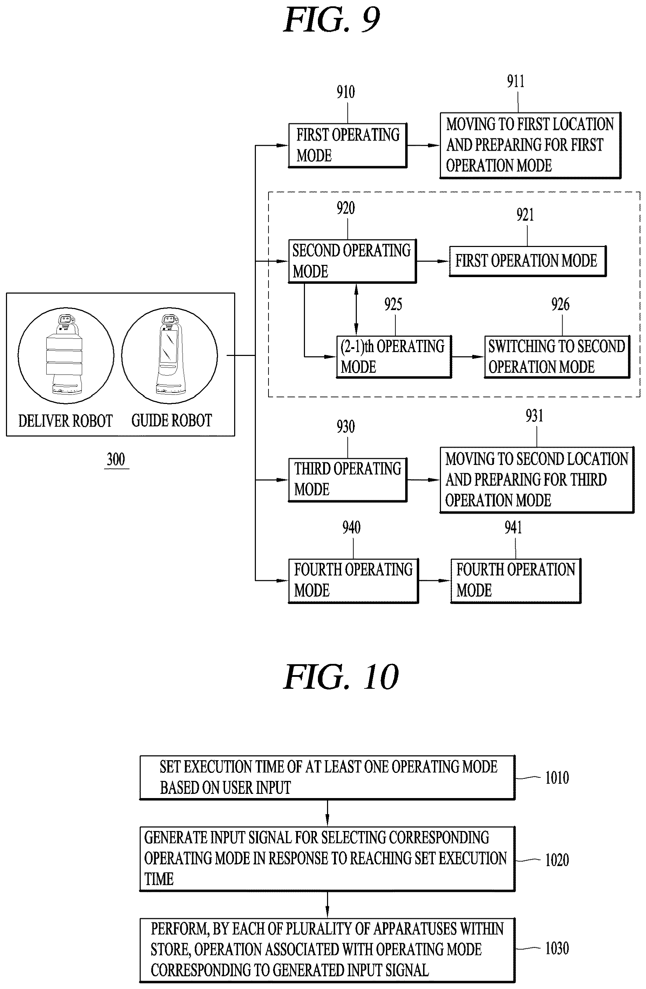

FIG. 9 is a diagram that is referenced to describe the operation, based on each operating mode, of the mobile robot according to the present disclosure within the store.

Examples of the mobile robot 300 provided within the store may include a plurality of mobile robots that have the same or different intended purposes. For example, the mobile robot 300 may be a delivery robot configured to deliver a product (e.g., food) purchased within the store to the location of a user (e.g., the user's table), or a guide robot configured to guide a user who uses the facilities of the store to the place or location thereof.

The mobile robot 300 may receive a signal corresponding to the selected operating mode from the unmanned terminal apparatus 100 and perform a control mode suitable for the current sales stage status based on information regarding the operating mode contained in the received signal.

Specifically, in response to a signal corresponding to a first operating mode 910 corresponding to the 'sales preparation' status, the mobile robot 300 may move to a first location and prepare for a first operation mode. The first operation mode may include outputting information associated with a delivery or guide function (e.g., an opening message or a sales preparation standby screen) to be performed by the mobile robot, and traveling by the mobile robot. At this point, the first location may be a designated place or location corresponding to the sales preparation status.

In response to a signal corresponding to a second operating mode 920 corresponding to the 'sales-in-progress' status, the mobile robot 300 may initiate the first operation mode at the first location. The first operation mode may vary depending on the inherent functions of the mobile robot 300. For example, the delivery robot may deliver a product or food ordered by a customer, and the guide robot may operate in the customer reception mode to answer customer inquiries or guide or escort a customer to a specific place or location.

According to an embodiment, after the first signal corresponding to the second operating mode 920, when the second signal corresponding to the absence of the manager is received, the mobile robot 300 may switch from a first operation mode 921 corresponding to the sales-in-progress status within the store to a second operation mode 926 corresponding to a (2-1)th operating mode 925 for handing the absence of the manager.

When the first operating mode 921 is the inherent function of the mobile robot, the second operating mode 926 involves performing the customer reception mode, the customer guide mode, or the customer escort mode.

While the second operating mode 926 is being executed, when it is detected that the manager has returned to the store (e.g., termination of the absence of the manager), the control mode of the mobile robot 300 may switch from the second operation mode 926 back to the first operation mode 921.

In addition, in response to a signal corresponding to a third operating mode 930 corresponding to the 'sales wrap-up' status, the mobile robot 300 may move to a second location and execute a third operation mode 931. At this point, the second position may refer to a designated space or location corresponding to the sales wrap-up status, and the third operation mode may refer to the manager-accompanying traveling mode for assisting the manager in sales preparation operations (i.e., cleaning the store, collecting waste, and similar tasks),

Subsequently, in response to a signal corresponding to a fourth operating mode 940 corresponding to the 'sales closure' status, the mobile robot 300 may execute a fourth operation mode 941. At this point, the fourth operation mode may refer to the store security mode for surveilling or monitoring the store and checks conditions within the store.

Although not illustrated in FIG. 9, in a case where a condition other than the absence of the manager is satisfied during the execution of the second operating mode 920 is being executed, another variant operating mode may be executed. For example, during the execution of the second operating mode 920, in a case where the density of customers within the store increases and the store becomes crowded, the mobile robot 300 may perform the guide function by entering a standby state at a designated location without traveling within the store to avoid obstructing customer movement. In addition, another variant operating mode may be executed by changing a traveling path or traveling speed of the mobile robot 300.

In this manner, according to the present disclosure, when the store operation is performed in a context-aware manner, the mobile robot within the store also operates in conjunction with the context-aware store operation, thereby minimizing reliance on operational personnel and enhancing convenience for the user and the manager.

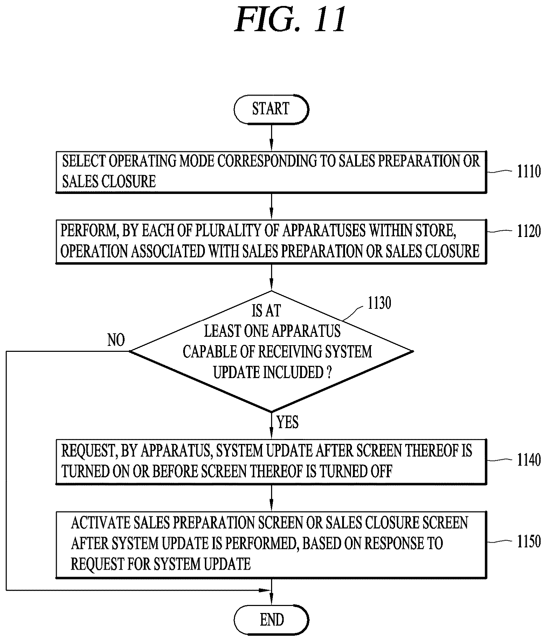

FIGS. 10 and 11 are flowcharts that are referenced to describe an integrated store management method according to another embodiment of the present disclosure.

First, FIG. 10 illustrates a method of automatically managing the selection of the operating mode. With reference to FIG. 10, the method starts with a step of setting an execution time for at least one operating mode based on user input through the unmanned terminal apparatus 100 (1010).

Specifically, in the operating mode control 110 through the unmanned terminal apparatus 100, an execution time for at least one operating mode, among the plurality of operating modes, may be set through a setting screen.

For example, through a setting screen of the unmanned terminal apparatus 100, the manager may set an execution time for the operating mode corresponding to the sales preparation status to 7:30 AM, set an execution time for the operating mode corresponding to the sales-in-progress status to 8:00 AM, and set an execution time for the operating mode corresponding to the sales wrap-up or closure status to 10:00 PM.

Subsequently, when the set execution time is reached, the unmanned terminal apparatus 100 automatically generates an input signal for selecting the operating mode corresponding to the set execution time in the unmanned terminal apparatus 100 (1020).

The generated signal is transmitted to each of the plurality of apparatuses within the store either directly or through the server. At this point, the signal is recognized as identical to the input applied through the above-described touch gesture of the manager.

Next, the plurality of apparatuses within the store perform respective operations associated with the operating mode corresponding to the input signal transmitted from the unmanned terminal apparatus (through the server) (1030).

For example, when a signal corresponding to the sales preparation status is generated at 7:30 AM, the display apparatus, the mobile robot, and the environmental control apparatus within the store may perform respective operations corresponding to the sales preparation status, such as powering on the screen, powering on the lighting equipment, moving to a designated location and entering a standby state at the designated location, and performing similar operations. In addition, at 10 PM, a signal corresponding to the sales wrap-up or closure status is generated, and the display apparatus, the mobile robot, and the environmental control apparatus within the store perform respective operations corresponding to the sales wrap-up or closure status. However, when the manager is absent during the sales wrap-up status, the manager-accompanying traveling mode may be omitted.

When an execution time for at least one of the plurality of operating modes is preset in this manner, the manager does not need to enter the store and operate the kiosk or to apply input remotely at the opening time for the store.

FIG. 11 is a diagram illustrating an additional method of operating an apparatus capable of receiving a system update within the store in a specific operating mode.

With reference to FIG. 11, the integrated store management system starts with a step of receiving or recognizing a selection of the operating mode corresponding to the sales preparation or sales closure through the unmanned terminal apparatus 100 (in FIG. 1) (1110).

At this point, each operating mode is selected through a single touch gesture, and reception of a signal corresponding to the selection or recognition of the sales stage status is achieved by each of the plurality of apparatuses within the store receiving a signal transmitted either from the unmanned terminal apparatus 100 or through the server.

The plurality of apparatuses within the store may perform respective operations associated with the sales preparation or closure (1120).

In preparation for sales, the mobile robot within the store may perform operations associated with the sales preparation, such as moving to a designated location and/or displaying a sales preparation screen on a touch screen thereof. In addition, for example, the display apparatuses provided within the store may perform respective operations associated with the sales preparation, such as activating respective displays and displaying respective sales preparation screens based on respective assigned roles. In addition, for example, the apparatuses within the store, such as the lighting equipment, the air conditioner, and the air purifier may perform respective operations associated with the sales preparation, such as entering respective powered-on states.

The mobile robot within the store may perform operations associated with the sales closure, such as displaying a sales closure screen and executing the store security mode for monitoring the store and check conditions within the store. Additionally, for example, the display apparatuses provided within the store may perform respective operations associated with the sales closure, such as displaying respective sales closure screens based on respective assigned roles and subsequently switching respective displays to deactivated states either in response to user feedback input or upon the lapse of a predetermined time. In addition, for example, the apparatuses within the store, such as the lighting equipment, the air conditioner, and the air purifier, may perform respective operations, such as entering respective powered-on states.

The integrated store management system may determine whether at least one apparatus within the store is capable of receiving the system update (1130).

When the result of the determination indicates that at least one apparatus is capable of receiving the system update, the at least one apparatus may request the system update from the server (through the unmanned terminal apparatus) after a screen of the at least apparatus is turned on or before the screen thereof is turned off (1140).

The server may generate a response to the request for the system update and transmit the generated response to the at least one apparatus (through the unmanned terminal apparatus).

Thereafter, based on the response to the request for the system update, the at least one apparatus may activate the sales preparation screen or the sales closure screen after the system update is performed (1150).

At this point, the response to the request for the system update may refer to an execution response on a system update execution request screen displayed (e.g., in the form of a pop-up) on the sales preparation screen or the sales closure screen. The execution response may typically be performed by a touch gesture from the manager, but in the absence of the manager (e.g., before or after working hours), the update may be automatically performed upon the elapse of a predetermined time since the request for the execution response.

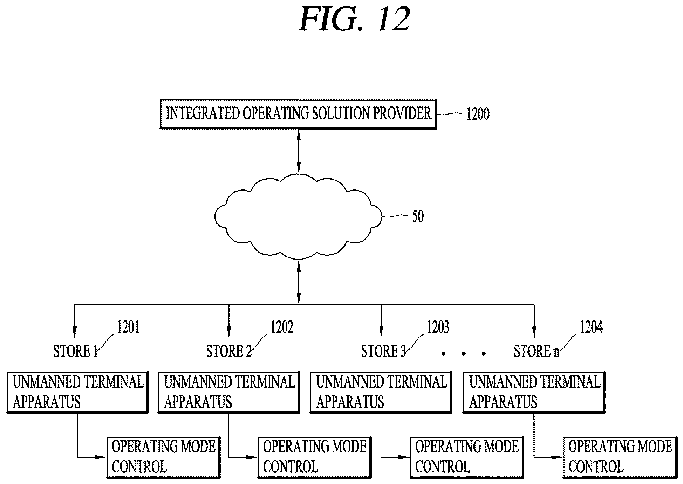

FIG. 12 is a diagram illustrating a state where the integrated store management systems according to the present disclosure are integrally managed on a per-store basis by an integrated operating solution provider.

With reference to FIG. 12, an integrated operating solution provider 1200 may communicate with a plurality of integrated store management systems (e.g., 1201, 1202, 1203, and 1204), on a per-store basis over a network 50.

The plurality of stores (e.g., Store 1, Store 2, Store 3, and so forth up to Store N) may be of the same business type or of different business types. In addition, the plurality of stores (e.g., Store 1, Store 2, Store 3, and so forth up to Store N) may be situated within a predetermined area or may be dispersed across separated locations.

The unmanned terminal apparatuses for the 'operating mode control' may be installed, respectively, in the plurality of stores (Store 1, Store 2, Store 3, and so forth up to Store N) in which the integrated store management systems are installed. At this point, each unmanned terminal apparatus may be a kiosk within the store or a terminal apparatus for the manager that is capable of performing the operating mode control remotely.

The integrated operations solution provider 1200 may receive status data associated with integrated store management from each of the plurality of integrated store management systems (e.g., 1201, 1202, 1203, and 1204), and, based on the received status data, may transmit control or update data to the integrated store management system of at least one of the stores.

The integrated operating solution provider 1200 may provide different solutions to the integrated store management systems 1201, 1202, 1203, and 1204 that are installed, respectively, in the plurality of stores. For example, a solution involving four operating modes for store management may be provided to the integrated store management system 1201 for Store 1, and a solution involving five or more operating modes (three or fewer operating modes) for store management may be provided to the integrated store management system 1202 for Store 2.

The integrated operating solution provider 1200 may perform integrated control such that the operating modes included in the integrated store management systems 1201, 1202, 1203, and 1204 that are installed, respectively, in the plurality of stores are initiated, changed, or updated simultaneously. For example, the integrated operating solution provider 1200 may simultaneously add apparatuses within the stores, which are included, respectively, in the plurality of integrated store management systems (e.g., 1201, 1202, 1203, and 1204), the apparatuses being capable of operating, respectively, in conjunction with the plurality of integrated store management systems, and may also transmit update information in such a manner as to simultaneously apply a subdivided operating mode.

The integrated operating solution provider 1200 may be programmed such that when an application or program configured to implement the plurality of integrated store management systems (e.g., 1201, 1202, 1203, and 1204) is installed, the plurality of integrated store management systems operate in conjunction with each other.

The integrated operating solution provider 1200 may include a single server, be configured with one or more server banks or a plurality of servers arranged in other configurations, or be implemented as a 'cloud-based distributed server.'

As described above, the integrated store management system and the integrated store management method according to some embodiments of the present disclosure can overcome limitations in the operation of existing kiosks due to constraints in ordering, payment, and advertisement functionalities, and can support and manage all processes from the sales preparation to the sales closure within the store, thereby maximizing the utilization of the kiosk. In addition, instead of conveniently replacing only a part of store operation, the integrated store management system and the integrated store management method can be involved in all processes for the store operation to perform the context-aware integrated store operation, thereby minimizing reliance on operational personnel and ensuring the convenience for both the user and the manager. In addition, the integrated store management system and the integrated store management method can simultaneously change the operational states of all the apparatuses connected within the store in accordance with the current sales stage status by simply changing the operating mode of the store. Accordingly, an efficient and integrated store operation of the store is possible with fewer personnel and reduced effort. Furthermore, the integrated store management system and the integrated store management method can switch the apparatuses within the store, which operate in conjunction with one another, to respective operation modes appropriately in response to the absence of the manager while the manager is absent during sales hours, thereby performing the context-aware integrated store operation by distinguishing between the presence and absence of the manager.

The further scope of applicability of the present disclosure will become apparent from the following detailed description. However, various alterations and modifications to the present disclosure would be readily understood by a person of ordinary skill in the art without departing from the spirit and scope of the technical idea of the present disclosure. The detailed descriptions of specific embodiments, such as preferred embodiments of the disclosure, should be understood as illustrative examples only.

The features, structures, effects, and the like described in the embodiments above are included in at least one embodiment of the disclosure, and are not necessarily limited to only one embodiment. Furthermore, the features, structures, effects, and the like illustrated in each embodiment may be combined or modified in other embodiments by a person skilled in the art to which the embodiments pertain. Therefore, the contents related to these combinations and modifications should be interpreted as falling within the scope of the disclosure.

Although the foregoing description has focused on embodiments, it will be understood by those skilled in the art to which the present disclosure pertains that these are presented for purposes of illustration and are not intended to limit the scope of the present disclosure, and that various modifications and applications not exemplified above are possible without departing from the essential characteristics of the embodiments. For example, each component illustrated in the embodiments may be configured in a modified manner. Differences arising from these modifications and applications should be interpreted as falling within the scope of the present disclosure, as defined by the following claims.

## Claims

1. An integrated store management method comprising:
a step of communicatively connecting an unmanned terminal apparatus to a plurality of apparatuses within a store in response to execution of a store management mode;
a step of receiving, as input, one operating mode selected from among a plurality of operating modes through the unmanned terminal apparatus; and
a step of performing, by each of the plurality of apparatuses, an operation associated with the operating mode corresponding to a signal corresponding to the selected operation mode after receiving the signal.

2. The integrated store management method of claim 1, wherein the plurality of apparatuses include two or more selected from the following: one or more display apparatuses, a mobile robot, and lighting equipment, and operations associated with the operating mode corresponding to the received signal may include changing at least one of the following: an operational state, control mode, screen state, location, function in progress, or traveling method of each apparatus, each of which corresponds to the selected operating mode.

3. The integrated store management method of claim 1, wherein the unmanned terminal apparatus, one of the plurality of apparatuses, includes a touch screen, and
wherein in the step of receiving the selected operating mode, as input, one operating mode is selected, as input, from among the plurality of operating modes using a first screen displayed on the touch screen of the unmanned terminal apparatus, when the store management mode is executed.

4. The integrated store management method of claim 3, wherein the step of performing the operation associated with the operating mode, comprises:
a step of displaying a second screen associated with the selected operating mode on the touch screen in response to the selection of the operating mode using the first screen.

5. The integrated store management method of claim 3, wherein the selected operating mode corresponds to a specific operating mode matched with a sales stage status of the store, among a plurality of operating modes, and
wherein the sales stage status of the store is one of the following: a sales preparation status, a sales-in-progress status, a sales wrap-up status, or a sales closure status.

6. The integrated store management method of claim 3, wherein the step of receiving the selected operating mode, as input, comprises:
a step of selecting one operating mode from among the plurality of operating modes based on a touch gesture on the first screen, and
wherein when a switch occurs from any one of the plurality of operating modes to another by performing the touch gesture, a sub-selection menu activated for each operating mode is changed together on the first screen and is displayed thereon.

7. The integrated store management method of claim 6, further comprising:
a step of receiving a selection input from the sub-selection menu activated for the selected operating mode;
a step of transmitting the signal containing first information on the selected operating mode and second information on the selected sub-selection menu to each of the plurality of apparatuses; and
a step of performing, by each of the plurality of apparatuses, an operation associated with an operating mode corresponding to the first information after changing an operation of an apparatus associated with the second information, among the plurality of apparatuses, when the operation associated with the operating mode corresponding to the first information is to be performed.

8. The integrated store management method of claim 2, wherein the step of performing the operation associated with the operating mode comprises:
a step of performing, by each of the plurality of apparatuses, an operation corresponding to a function that is set, after the mobile robot moves to a location associated with the selected operating mode.

9. The integrated store management method of claim 8, wherein an initial location of the mobile robot associated with the selected operating mode is determined in a manner that varies according to an attribute of the selected operating mode, and
wherein the operation corresponding to the set function is determined in a manner that varies based on an attribute of the mobile robot, the selected operating mode, and whether a signal is generated due to the absence of a manager.

10. The integrated store management method of claim 9, wherein the step of receiving the selected operating mode, as input, comprises:
a step of receiving a selection input corresponding to the absence of the manager through the unmanned terminal apparatus while an operating mode corresponding to a sales-in-progress status of the store is being executed, and
wherein the step of performing the operation associated with the operating mode comprises:
a step of switching, by the mobile robot, an operation from a first control mode corresponding to the sales-in-progress status of the store to a second control mode configured for the absence of the manager, based on recognizing the absence of the manager.

11. The integrated store management method of claim 8, wherein the step of performing the operation associated with the operating mode comprises:
a step of executing, by the mobile robot, a mode for accompanying a manager after moving to a designated location, when an operating mode corresponding to a sales wrap-up status of the store is executed, and executing, by the mobile robot, a traveling mode for security when a switch to an operating mode corresponding to a sales closure status of the store occurs.

12. The integrated store management method of claim 1, wherein the step of receiving the selected operating mode, as input, comprises:
a step of setting an execution time of the operating mode based on user input; and
a step of generating an input signal for selecting a corresponding operating mode in response to reaching the set execution time.

13. The integrated store management method of claim 1, wherein the step of performing the operation associated with the operating mode comprises:
a step of determining whether at least one of the plurality of apparatuses is an apparatus capable of receiving a system update;
a step of requesting, by the at least one apparatus, the system update from a server after a screen of the at least one apparatus is turned on or before the screen thereof is tumed off; and
a step of displaying, by the at least one apparatus, a sales preparation screen or a sales closure screen after the system update is performed, based on a response to the request.

14. An integrated store management system comprising:
a plurality of apparatuses within a store;
an unmanned terminal apparatus communicatively connected to the plurality of apparatuses in response to execution of a store management mode; and
a server that, using at least one protocol, receives a first signal corresponding to an operating mode selected from among a plurality of operating modes through the unmanned terminal apparatus and transmits a second signal containing operating mode information contained in the received first signal to each of the plurality of apparatuses,
wherein the plurality of apparatuses within the store receive the second signal and perform respective operations associated with a corresponding operating mode.
